(19) Europäisches Patentamt
European Patent Office
Office européen des brevets

(11) Publication number: **0 394 631 A2**

(12) **EUROPEAN PATENT APPLICATION**

(21) Application number: **90103112.0**

(22) Date of filing: **19.02.90**

(51) Int. Cl.[5]: **A01N 43/56, //(A01N43/56, 59:20,57:12,47:34,47:14,47:04, 43:66,43:40,43:28,37:38,37:36, 37:34,37:22)**

(30) Priority: **25.04.89 JP 105542/89**

(43) Date of publication of application: **31.10.90 Bulletin 90/44**

(84) Designated Contracting States: **AT BE CH DE DK ES FR GB GR IT LI LU NL SE**

(71) Applicant: **NISSAN CHEMICAL INDUSTRIES LTD.**
**3-7-1, Kanda Nishiki-cho**
**Chiyoda-ku Tokyo(JP)**

(72) Inventor: **Hanaue, Masami, Nissan Chem.Ind., Ltd. Res. Stat.**
**Bio. Science., 1470, Ohaza Shiraoka,**
**Shiraoka-cho**
**Minamisaitama-gun, Saitama-ken(JP)**
Inventor: **Nishikubo, Masao, Nissan Chem. Ind.Ltd., Res.Stat.**
**Bio. Science., 1470, Ohaza Shiraoka**
**Shiraoka-cho**
**Minamisaitama-gun, Saitama-ken(JP)**
Inventor: **Yamagishi, Kazuhiro, Nissan Chem. Ind. Ltd., Res.**
**Stat. Bio. Sc., 1470, Ohaza Shiraoka,**
**Shiraoka-cho**
**Minamisaitama-gun, Saitama-ken(JP)**
Inventor: **Suzuki, Hideo, c/o Nissan Chem. Ind. Ltd.**
**Central Res. Institute, 722-1, Tsuboi-cho**
**Funabashi-shi, Chiba-ken(JP)**
Inventor: **Mita, Takeshi, c/o Nissan Chem.Ind.Ltd.**
**Central Res. Institute, 722-1, Tsuboi-cho**
**Funabashi-shi, Chiba-ken(JP)**
Inventor: **Takeyama, Toshiaki, c/o Nissan Chem.Ind.Ltd.**
**Central Res. Institute, 722-1, Tsuboi-cho**
**Funabashi-shi, Chiba-ken(JP)**

(74) Representative: **Hansen, Bernd, Dr.rer.nat. et al**
**Hoffmann, Eitle & Partner Patentanwälte**
**Arabellastrasse 4 Postfach 81 04 20**
**D-8000 München 81(DE)**

# (54) Composition of fungicide for agricultural and horticultural use.

(57) Composition of fungicide for agricultral and horticultural use contining at least one of an amide substituted derivative represented by the formula (I) and its optical isomer and at least one of the active ingredient compound of the known fungicide,

A-CONH C H-D (I)
|
B

(wherein A and B represent a specific five membered heterocyclic aromatic group which can be substituted and D represents -CN, $-CSNH_2$ or $-C(SO)NH_2$ .

EP 0 394 631 A2

# COMPOSITION OF FUNGICIDE FOR AGRICULTURAL AND HORTICULTURAL USE

## BACKGROUND OF THE INVENTION

### Field of the invention

The present invention relates to compositions of fungicide for agricultural and horticultural use, more in details to new compositions of fungicide for agricultural and horticultural use formed by mixing a specific amide-substituted derivatives and a compound which is an effective ingredient of a known fungicide.

### Description of the prior art

Conventionally, the development of the fungicide for agricultural and horticultural use has been widely carried out in order to prevent the diseases of plants and many agents have been applied to the practical use.

However, many of the conventional fungicides for agricultural and horticultural use have drawbacks respectively and few of those is sufficient. The preferable conditions as superior fungicides for agricultural and horticultural use are to be satisfied for instance in the following conditions:

(1) to have the control effect by a small amount of application;
(2) to have the control effect against every disease;
(3) to have both of the preventive and the curative effects;
(4) to have no occurrence of resistant fungi;
(5) to have long residual effect.

Recently, because the protection against the plant diseases (for instance downy mildew or phytophthora disease and so on) has become more important many kinds of fungicides for agricultural and horticultural use have been employed for protecting against such diseases, but each of those has shown drawbacks respectively.

For instance, fungicides containing acylalanine compound as active ingredient (for instance metalaxyl ) (common name) etc. ), fungicide containing phosphinic acid compound as active ingredient (for isntatnce, fosethyl(common name) etc.) and fungicide containing cyanoxime compound as active ingredient (for instance, cymoxanil(common name) etc. ) have been supplied in the practical use, however those have the drawbacks of the lowering of the effect due to the occurrence of resistant fungi, the limitation of the application to the particular diseases and the short residual effect and so on.

While, fungicides containing dithiocarbamate compound as active ingredient (for instance, mancozeb (common name) etc.), fungicides containing N-haloalkylthio compound as active ingredient (for instance, captan (common name) etc.), fungicides containing organochlorine compound as active ingredient (for instance, chlorothalonil (common name) etc.), fungicides containing sulfinic acid compound as active ingredient (for instance, dichlofulanide (common name) etc.), fungicides containing inorganic copper compound as active ingredient (for instance, copper oxychloride etc.), fungicides containing organic copper compound as active ingredient ( for instance, oxine copper (common name) etc.), fungicides containing aniline compound as active ingredient (for instance, fulazinam and anilazine (common name)) and fungicides containing naphthoquinone compound as active ingredient (for instance, dithianon (common name) etc.) have been supplied for the practical use, and those are characterised in the effectiveness for control against each disease and occurrence of resistant fungi, however those have the drawbacks that they have little curative effect (the preventive effect against the attack of disease, in case the plant is infected with the phytopathogenic fungi.), and further that those are to be applied in a comparatively large amount because, if the application is in small amount, it shows insufficient effect, so that there may be a threat of phytotoxicity in the useful plant.

### The Summary of the Invention

The inventors of the present invention has completed the present invention by finding out that the drawbacks mentioned above can be overcome by using the fungicides of the present invention which are

formed by mixing a specific amide-substituted derivatives with the known fungicides mentioned above.

In more detail, the fungicides of the present invention exhibit the preventive effect (multiplied effect) against the downy mildiew, one of the dieseases which are most difficut to prevent, and the disease (which is caused by the phytopathogenic fungi which belongs to Phycomycetes) by a small amount of application comparing to the application of each single effective ingredient, and show the various kinds of superior characteristics that they have both of the preventive and curative effects, the effectiveness against the resistant fungi of the known fungicides and the long residual effect.

Composition of fungicide for agricultural and horticultural use containing at least one of an amide-substituted derivative represented by the formula (I) and its optical isomer and at least one kind of the active ingredient compound of the known fungicide,

A-CONH C H-D (I)
B

( wherein A represents a five membered heterocyclic aromatic group represented by

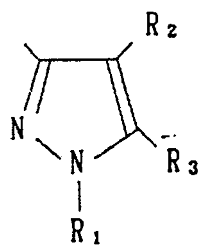 , 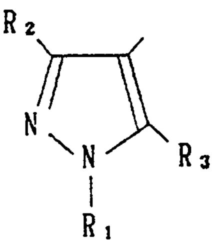 or 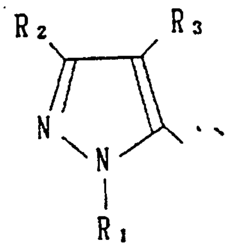 ,

B represents a five membered heterocyclic aromatic group represented by

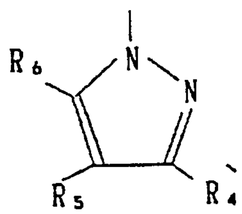 , 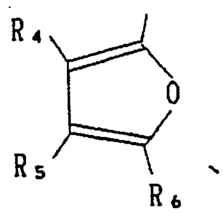 , 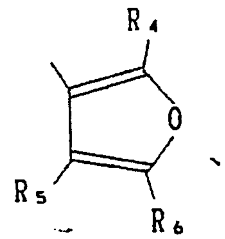 ,

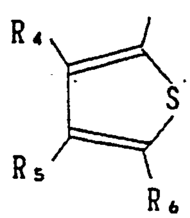 or 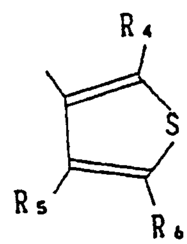

D represents -CN, $-CSNH_2$ or $-C(SO)NH_2$.

Wherein $R_1$ represents a hydrogen atom, a lower alkyl group having from 1 to 8 carbon atoms, a cycloalkyl group having from 3 to 6 carbon atoms, a cycloalkylalkyl group having from 4 to 8 carbon atoms, a halogenated alkyl group having from 1 to 8 carbon atoms, an alkenyl group having from 2 to 8 carbon atoms, a halogenated alkeny group having from 2 to 8 carbon atoms, alkynyl having from 2 to 8 carbon atoms or an alenyl group having from 3 to 8 carbon atoms,

$R_2$and $R_3$ represents each independently a hydrogen atom, a lower alkyl group having from 1 to 4 carbon atoms, a hologen atom, a hologenated alkyl group having from 1 to 4 carbon atoms, an alkoxy group having from 1 to 4 carbon atoms and cyano group or a lower alkylthio group having from 1 to 4 carbon atoms,

$R_4$, $R_5$ and $R_6$ represents each independently a hydrogen atom, a lower alkyl group having from 1 to 4 carbon atoms, halogen atom or halogenated alkyl group having from 1 to 4 carbon atoms.

As the active ingredient compounds of the above known fungicides, for instance dithiocarbamate compounds, N-haloalkylthio compounds, organochlorine compounds, sulfinic acid compounds, inorganic copper compounds, organic copper compounds, aniline compounds, naphthoquinone compounds, acylalanine compounds, phosphinic acid compounds, cyano-oxim compounds, acrylic amide compounds, and acrylic acid compounds or imidazole compounds ( compounds disclosed in Japanese Patent Laid-open No.

Hei 1-131163) are mentioned, and the concrete general names and the structural formulas are illustrated as follows but the present invention should not be limited to the illustrated exmaples.

Dithiocabomate Compounds such as:

mancozeb

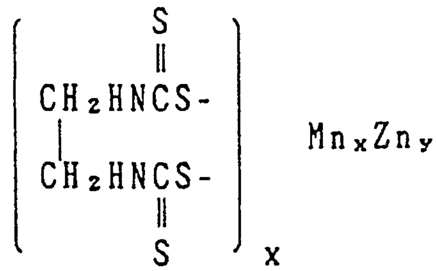

maneb

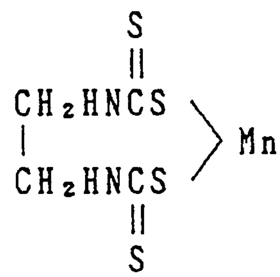

polycarbamate

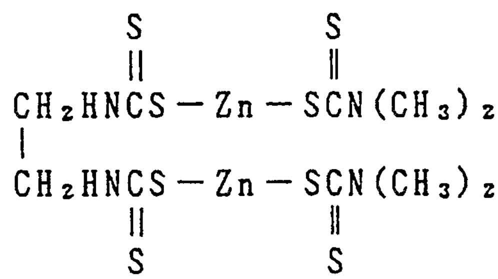

N-haloalkylthio compounds such as :

captan

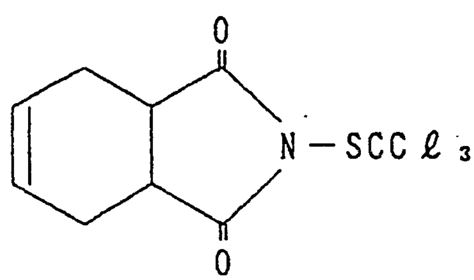

folpet 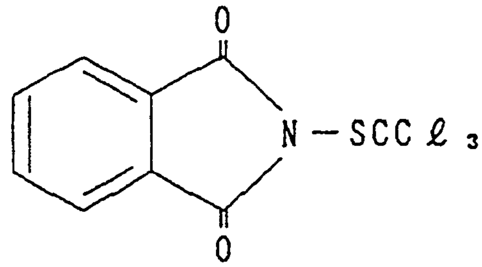

Oruganochlorine compounds such as :

chlorotalonil 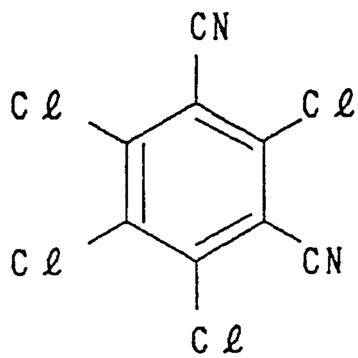

Sulfinic acid compounds such as :

dichlofluanid 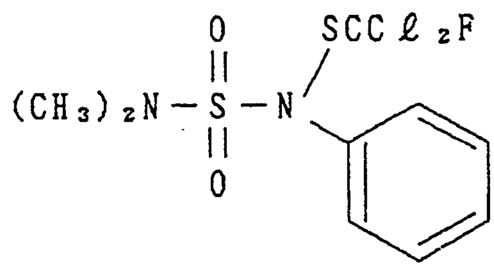

Inorganic copper compounds such as :

basic chloride copper $(CuCl_2)_x \cdot (CuO)_y \cdot (H_2O)_z$

copper hydroxide $Cu(OH)_2$

Organic copper compound such as :

oxine copper 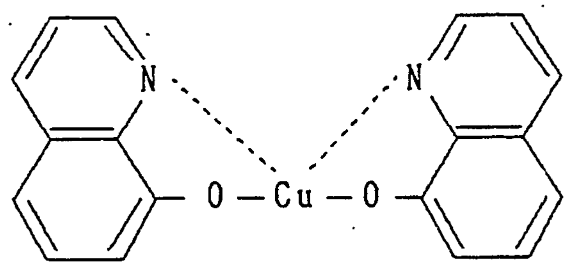

Aniline compounds such as :

fluazinam 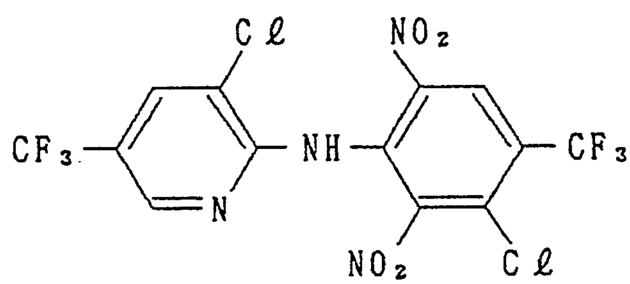

anilazine 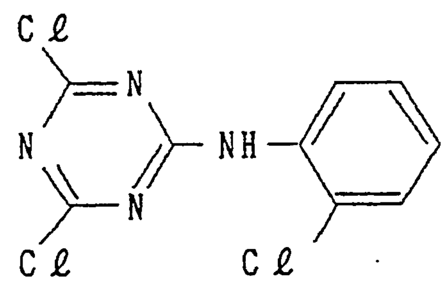

Naphthoquinone compounds such as :

dithianon

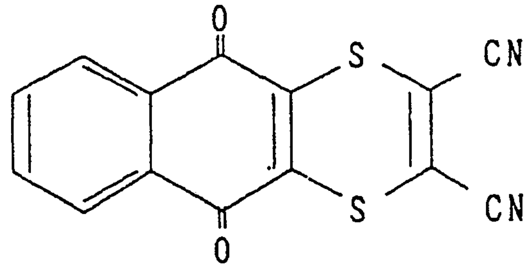

Acylalanine compound such as :

metalaxyl

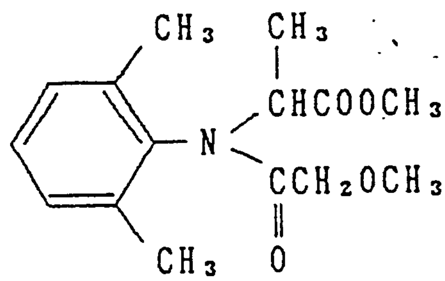

oxadixyl

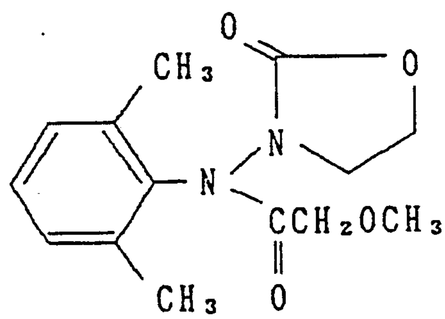

Phosphinic acid compounds such as :

fosethyl

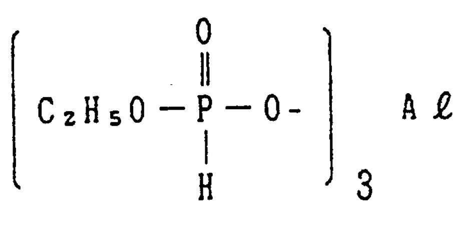

Cyanooxim compounds such as :

cymoxanil

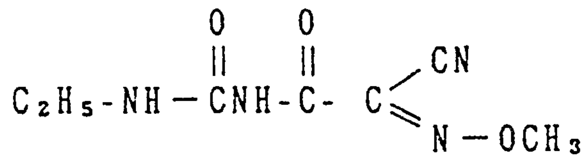

Acrylic amide compound such as :
known compound A

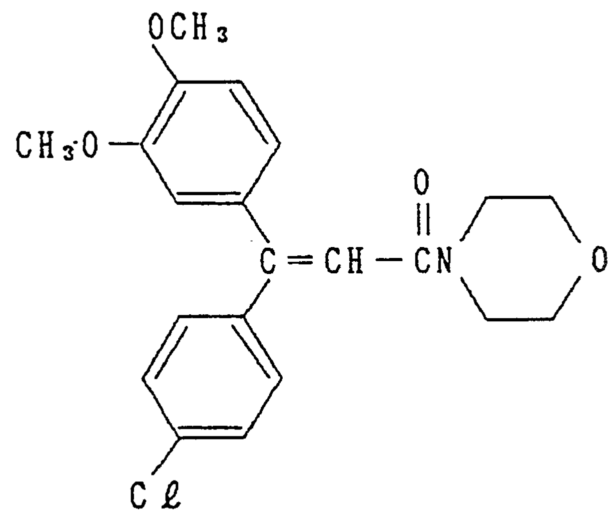

Acrylic acid compound such as :
known compound B

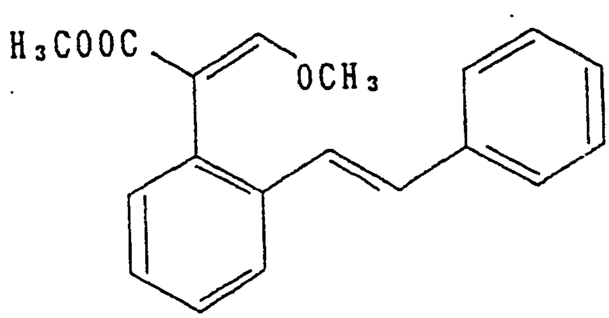

Subsequently, in TABLE I the specific amide-substituted derivatives represented by the above formula (I) are illustrated conctrely, but the present invention should not be limited to those only.

Those compounds are the ones synthesized by the manufacturing method described in the specification of the Japanese Patent Application No. Hei 1-199963 filed by the same applicant as the present application.

TABLE I

$$\begin{array}{c} A-CONHCH-D \\ \quad\quad\quad\quad\quad | \\ \quad\quad\quad\quad\quad B \end{array}$$

| Compound No. | A | $R_1$ | $R_2$ | $R_3$ | B | $R_4$ | $R_5$ | $R_6$ | D |
|---|---|---|---|---|---|---|---|---|---|
| 1 | A-2 | $CH_3$ | H | H | B-1 | H | H | H | CN |
| 2 | A-2 | $CH_3$ | H | H | B-2 | H | H | H | CN |
| 3 | A-2 | $CH_3$ | $CH_3$ | H | B-4 | H | H | H | CN |
| 4 | A-2 | $CH_3$ | $CH_3$ | H | B-5 | H | H | H | $CSNH_2$ |
| 5 | A-3 | $CH_3$ | $CH_3$ | H | B-1 | H | H | H | CN |
| 6 | A-3 | $CH_3$ | $CH_3$ | H | B-2 | H | H | H | $CSNH_2$ |
| 7 | A-3 | $CH_3$ | $CH_3$ | H | B-3 | H | H | H | $CSNH_2$ |
| 8 | A-3 | $CH_3$ | $CH_3$ | H | B-4 | H | H | H | CN |
| 9 | A-3 | $CH_3$ | $CH_3$ | H | B-4 | H | H | H | $CSNH_2$ |
| 10 | A-3 | $CH_3$ | $CH_3$ | H | B-5 | H | H | H | CN |
| 11 | A-3 | $CH_3$ | $CH_3$ | H | B-5 | H | H | H | $CSNH_2$ |
| 12 | A-3 | $C_2H_5$ | $CH_3$ | H | B-3 | H | H | H | CN |
| 13 | A-3 | $C_2H_5$ | $CH_3$ | H | B-5 | H | H | H | $CSNH_2$ |
| 14 | A-3 | $C_3H_7$-i | $CH_3$ | H | B-4 | H | H | H | CN |
| 15 | A-3 | $C_3H_7$-i | $CH_3$ | H | B-4 | H | H | H | $CSNH_2$ |
| 16 | A-3 | $C_4H_7$-c | $CH_3$ | H | B-4 | H | H | H | CN |
| 17 | A-3 | $C_4H_7$-c | $CH_3$ | H | B-4 | H | H | H | $CSNH_2$ |
| 18 | A-3 | $C_5H_9$-c | $CH_3$ | H | B-4 | H | H | H | $CSNH_2$ |
| 19 | A-3 | $CH_2(C_3H_5$-c) | $CH_3$ | H | B-4 | H | H | H | CN |
| 20 | A-3 | $CH_2(C_3H_5$-c) | $CH_3$ | H | B-4 | H | H | H | $CSNH_2$ |
| 21 | A-3 | $CH_3$ | $CH_3$ | H | B-4 | H | H | H | $C(SO)NH_2$ |
| 22 | A-3 | $CH_3$ | $CH_3$ | H | B-5 | H | H | H | $C(SO)NH_2$ |
| 23 | A-3 | $C_3H_7$-i | $CH_3$ | H | B-4 | H | H | H | $C(SO)NH_2$ |

Compounds from A-1 to A-3 and from B-1 to B-5 in the above TABLE I are represented by the following formulae.

(Wherein $R_1$- $R_6$ have the same meanings defined above.) Further, in TABLE I $C_3H_7$-i represents isopropyl group, $C_4H_7$-C represents cyclobutyl group, $C_5H_9$-C represents cyclopentyl group, $CH_2(C_3H_5$-C) represents cyclopropylmethyl group respectively.

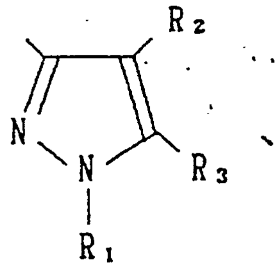

A - 1

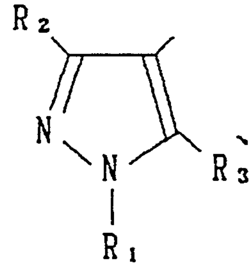

A - 2

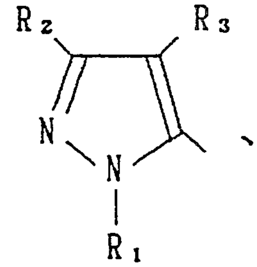

A - 3

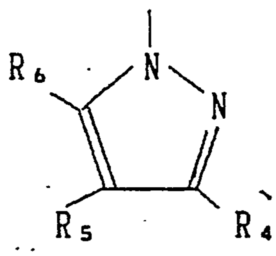

B - 1

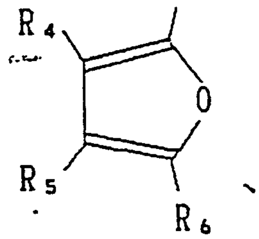

B - 2

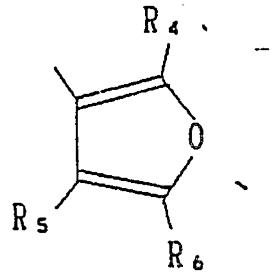

B - 3

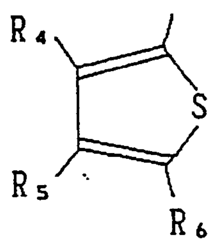

B - 4

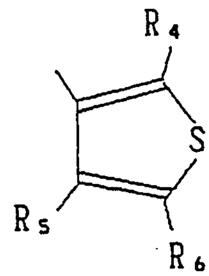

B - 5

The melting point of each compound is as follows:

| Compound No. | Melting point(°C) | Compound No. | Melting point(°C) |
|---|---|---|---|
| 1 | 188~190(decomp.) | 13 | 162~163 |
| 2 | 160~162 | 14 | 89~ 91 |
| 3 | 139~141 | 15 | 210~212 |
| 4 | 193~197(decomp.) | 16 | 115~117 |
| 5 | 143~144 | 17 | 201~205(decomp.) |
| 6 | 149~150 | 18 | 165~180(decomp.) |
| 7 | 152~154 | 19 | 129~130 |
| 8 | oil | 20 | 187~190 |
| 9 | 150~152 | 21 | 153~156 |
| 10 | 107~109 | 22 | 164~166 |
| 11 | 171~171 | 23 | 131~135 |
| 12 | 103~106 | | |

The fungicide for agricultural and horticultural use of the present invention is effective to not only the downy mildiew or the phytophtora disease of every kind of plants but also to the other diseases. As the major diseases, the followings are mentioned; downy mildiews of cucumber, grape, lettuce, chinese cabbage, common hop; Phytophthora blight of potato, tomato and green pepper; Phytophthora capsici Leonian of cucumber; damping-off of tomato, cucumber and rice plant caused by Pythium fungi as well as beet plant damping-off diseases caused by Aphanomyces fungi

For application of the fungicide for agricultural and horticultural use of the present invention to crops, the fungicide can be applied to crops for instance by means of seed treatment, foliage treatment and soil treatment. Although the amount and concentration thereof to be actually applied to crops vary in accordance with the crops to be treated in accordance with the crops to be treated, the diseases to be protected against, the degree of the occurrence of the diseases, and the method of application of the fungicide, when the fungicide is to be applied over crops , the amount of the active ingredient may be from 2 to 2000 g/ha, preferably from 10 to 1000 g. The concentration of the fungicide to be applied may be from 1 to 1000 ppm, preferably from 5 to 500 ppm.

When applying the fungicide composition for agricutural and horticultural use of the present invention, it can be used in combination with a suitable carrier, for example, a solid carrier, a liquid carrier and any adjuvant for formulation such as surface active agent in the form of wettable powders, emulsifiers, flowables, dusts or granulars for spraying on foliage, dernching or soil incorporating soil.

Further, the fungicide of the present invention may be used in combination with the other kind of fungicide, insecticides, herbicides, plant growth regulators, and fertilizer substances, soil improving agents and the like.

The mixing rate of the amide substituted derivative represented by the above formula (I) and the effective ingredient of the other known fungicide, in general, to the former the latter may be from 0.1 to 300 parts by weight but preferably from 0.5 to 100 parts by weight. Further, the amount of the effective ingredient of the fomulations may be from 0.1 to 99.9 % but preferably from 1 to 90 %.

Examples of formulations of compositions of the fungicide for agricultural and horticultural use of the present invention are mentioned hereunder, in which the kinds of ingredients and the amounts thereof are concretely described. Needless to say, these examples do not whatsoever limit the scope of the present invention. The compound No. of the examples of the formulations mentioned hereunder represents the compound No. described in the TABLE 1 and the "parts" means " part by weight".

| Formulation Example 1: Wettable powder | |
|---|---|
| Present compound No. 6: | 3 parts |
| Mancozeb | 75 parts |
| Zeeklite PFP (trade name, a mixture of kaolinite and sericite manufactured by Zeeklite Mining Industries, Co., Ltd.) | 13 parts |
| Solpol 5039 (trade name, anionic surface-active agent manufactured by Toho Chemical, Co., Ltd., Japan) | 4 parts |
| Carplex #80 (trade name, white carbon manufactured by Shionogi Seiyaku K.K., Japan) | 3 parts |
| calcium lignin sulfonate | 2 parts |

The above-described components are mixed together and ground by using a jet air mill to form a wettable powder. Upon use, the wettable powder is diluted with water up to one hundredth to ten thousandth in concentration and sprayed at a rate of 100 to 2000 g of the active ingredients per hectare.

| Formulation Example 2: Wettable powder | |
|---|---|
| Present compound No. 9: | 8 parts |
| copper oxychloride | 56 parts |
| Zeeklite PFP (trade name, a mixture of kaolinite and sericite manufactured by Zeeklite Mining Industries, Co., Ltd.) | 27 parts |
| Solpol 5039 (trade name, anionic surface-active agent manufactured by Toho Chemical, Co., Ltd., Japan) | 4 parts |
| Carplex #80 (trade name, white carbon manufactured by Shionogi Seiyaku K.K., Japan) | 3 parts |
| calcium lignin sulfonate | 2 parts |

The above-described components are mixed together and ground by using a jet air mill to form a wettable powder. Upon use, the wettable powder is diluted with water up to one hundredth to ten thousandth in concentration and sprayed at a rate of 100 to 2000 g of the active ingredients per hectare.

| Formulation Example 3: Wettable powder | |
|---|---|
| Present compound No. 11: | 2 parts |
| fosethyl | 60 parts |
| Zeeklite PFP (trade name, a mixture of kaolinite and sericite manufactured by Zeeklite Mining Industries, Co., Ltd.) | 29 parts |
| Solpol 5039 (trade name, anionic surface-active agent manufactured by Toho Chemical, Co., Ltd., Japan) | 4 parts |
| Carplex #80 (trade name, white carbon manufactured by Shionogi Seiyaku K.K., Japan) | 3 parts |
| calcium lignin sulfonate | 2 parts |

The above-described components are mixed together and ground by using a jet air mill to form a wettable powder. Upon use, the wettable powder is diluted with water up to one hundredth to ten thousandth in concentration and sprayed at a rate of 100 to 2000 g of the active ingredients per hectare.

| Formulation Example 4: Flowables | |
|---|---|
| Present compound No. 3 | 5 parts |
| chlorothalonil | 50 parts |
| Solpol 3353 (trade name, non-ionic surface-active agent manufactured by Toho Chemicals, Co., Ltd., Japan) | 10 parts |
| Lunox 1000C (trade name, as anionic surface-active agent manufactured by Toho Chemicals, Co., Ltd., Japan) | 1 part |
| 1% aqueous solution of Xanthan gum (natural high-molecular compound) | 10 parts |
| Water | 24 parts |

In the above respective flowables, each component except the active ingredient (present compound) are uniformly dissolved together to form a solution. The resulting mixture is added by the present compound, thoroughly stirred and wet-ground by means of sand mill to obtain a flowable. Upon use, the flowable is diluted with water up to one hundredth to ten thousandth in concentration and sprayed at a rate of 100 to 2000 g of the active ingredients per hectare.

| Formulation Example 5: Flowables | |
|---|---|
| Present compound No. 7 | 2 parts |
| Mancozeb | 48 parts |
| Solpol 3353 (trade name, non-ionic surface-active agent manufactured by Toho Chemicals, Co., Ltd., Japan) | 10 parts |
| Lunox 1000C (trade name, as anionic surface-active agent manufactured by Toho Chemicals, Co., Ltd., Japan) | 1 part |
| 1% aqueous solution of Xanthan gum (natural high-molecular compound) | 10 parts |
| Water | 29 parts |

In the above respective flowables, each component except the active ingredient (present compound) are uniformly dissolved together to form a solution. The resulting mixture is added by the present compound, thoroughly stirred and wet-ground by means of sand mill to obtain a flowable. Upon use, the flowable is diluted with water up to one hundredth to ten thousandth in concentration and sprayed at a rate of 100 to 2000 g of the active ingredients per hectare.

| Formulation Example 6: Flowables | |
|---|---|
| Present compound No. 10 | 10 parts |
| Oxadixyl | 10 parts |
| Solpol 3353 (trade name, non-ionic surface-active agent manufactured by Toho Chemicals, Co., Ltd., Japan) | 10 parts |
| Lunox 1000C (trade name, as anionic surface-active agent manufactured by Toho Chemicals, Co., Ltd., Japan) | 1 part |
| 1% aqueous solution of Xanthan gum (natural high-molecular compound) | 10 parts |
| Water | 59 parts |

In the above respective flowables, each component except the active ingredient (present compound) are uniformly dissolved together to form a solution. The resulting mixture is added by the present compound, thoroughly stirred and wet-ground by means of sand mill to obtain a flowable. Upon use, the flowable is diluted with water up to one hundredth to ten thousandth in concentration and sprayed at a rate of 100 to 2000 g of the active ingredients per hectare.

| Formulation Example 7: Emulsifiable concentrate | |
|---|---|
| Present compound No. 11 | 4 parts |
| Fluazinam | 24 parts |
| Xylene | 57 parts |
| Solpol 2680 (trade name: a mixture of a non-ionic surface-active agent and an anionic surface-active agent manufactured by Toho Chemical, Co., Ltd., Japan | 15 parts |

The above components are intimately mixed to form an emulsifiable concentrate. Upon used, the emulsifiable concentrate is diluted with water up to one hundredth to ten thousandth in concentration and sprayed at a rate of 100 to 2000 g of the active ingredients per hectare.

| Formulation Example 8: Emulsifiable concentrate | |
|---|---|
| Present compound No. 12 | 5 parts |
| Known compound A | 50 parts |
| Xylene | 30 parts |
| Solpol 2680 (trade name: a mixture of a non-ionic surface-active agent and an anionic surface-active agent manufactured by Toho Chemical, Co., Ltd., Japan | 15 parts |

The above components are intimately mixed to form an emulsifiable concentrate. Upon used, the emulsifiable concentrate is diluted with water up to one hundredth to ten thousandth in concentration and sprayed at a rate of 100 to 2000 g of the active ingredients per hectare.

| Formulation Example 9: Dusts | |
|---|---|
| Present compound No. 8 | 0.2 part |
| Known compound B | 1 part |
| Carplex #80 (trade name, white carbon manufactured by Shionogi Seiyaku K.K., Japan) | 1 part |
| Zeeklite D (trade name, a mixture of kaolinite and sericite manufactured by Zeeklite Mining Industries, Co., Ltd.) | 96.3 parts |
| diisopropyl phosphate | 1.5 parts |

The above components are homogeneously mixed together to form a dust. Upon use, the dust is spreaded or mixed with soil at a rate of 100 to 2000 g of the active ingredients per hectare.

| Formulation Example 10: Granule | |
|---|---|
| Present compound No. 4 | 2 parts |
| Metalaxyl | 1 part |
| Bentonite | 66 parts |
| Talc | 30 parts |
| calcium lignin sulfonate | 1 part |

The above components are mixed intimately together and ground, incorporated with a small amount of water and mixed together with stirring. The resulting mixture is granulated by means of extrusion-granulator and dried to form granules. Upon use, the granule is spreaded or mixed with soil at a rate of 100 to 2000 g of the active ingredients per hecare.

| Formulation Example 11: Wettable powder | |
|---|---|
| Present compound No. 15: | 10 parts |
| Mancozeb | 55 parts |
| Zeeklite PFP (trade name, a mixture of kaolinite and sericite manufactured by Zeeklite Mining Industries, Co., Ltd.) | 26 parts |
| Solpol 5039 (trade name, anionic surface-active agent manufactured by Toho Chemical, Co., Ltd., Japan) | 4 parts |
| Carplex #80 (trade name, white carbon manufactured by Shionogi Seiyaku K.K., Japan) | 3 parts |
| calcium lignin sulfonate | 2 parts |

The above-described components are mixed together and ground by using a jet air mill to form a wettable powder. Upon use, the wettable powder is diluted with water up to one hundredth to ten thousandth in concentration and sprayed at a rate of 100 to 2000 g of the active ingredients per hectare.

| Formulation Example 12: Wettable powder | |
|---|---|
| Present compound No. 18: | 5 parts |
| copper oxychloride | 60 parts |
| Zeeklite PFP (trade name, a mixture of kaolinite and sericite manufactured by Zeeklite Mining Industries, Co., Ltd.) | 26 parts |
| Solpol 5039 (trade name, anionic surface-active agent manufactured by Toho Chemical, Co., Ltd., Japan) | 4 parts |
| Carplex #80 (trade name, white carbon manufactured by Shionogi Seiyaku K.K., Japan) | 3 parts |
| calcium lignin sulfonate | 2 parts |

The above-described components are mixed together and ground by using a jet air mill to form a wettable powder. Upon use, the wettable powder is diluted with water up to one hundredth to ten thousandth in concentration and sprayed at a rate of 100 to 2000 g of the active ingredients per hectare.

| Formulation Example 13: Wettable powder | |
|---|---|
| Present compound No. 19: | 10 parts |
| Known compound A | 10 parts |
| Zeeklite PFP (trade name, a mixture of kaolinite and sericite manufactured by Zeeklite Mining Industries, Co., Ltd.) | 71 parts |
| Solpol 5039 (trade name, anionic surface-active agent manufactured by Toho Chemical, Co., Ltd., Japan) | 4 parts |
| Carplex #80 (trade name, white carbon manufactured by Shionogi Seiyaku K.K., Japan) | 3 parts |
| calcium lignin sulfonate | 2 parts |

The above-described components are mixed together and ground by using a jet air mill to form a wettable powder. Upon use, the wettable powder is diluted with water up to one hundredth to ten thousandth in concentration and sprayed at a rate of 100 to 2000 g of the active ingredients per hectare.

| Formulation Example 14: Flowables | |
|---|---|
| Present compound No. 14 | 10 parts |
| Mancozeb | 60 parts |
| Solpol 3353 (trade name, non-ionic surface-active agent manufactured by Toho Chemicals, Co., Ltd., Japan) | 10 parts |
| Lunox 1000C (trade name, as anionic surface-active agent manufactured by Toho Chemicals, Co., Ltd., Japan) | 2 part |
| 1% aqueous solution of Xanthan gum (natural high-molecular compound) | 5 parts |
| Water | 13 parts |

In the above respective flowables, each component except the active ingredient (present compound) are uniformly dissolved together to form a solution. The resulting mixture is added by the present compound, thoroughly stirred and wet-ground by means of sand mill to obtain a flowable. Upon use, the flowable is diluted with water up to one hundredth to ten thousandth in concentration and sprayed at a rate of 100 to 2000 g of the active ingredients per hectare.

| Formulation Example 15: Flowables | |
|---|---|
| Present compound No. 17 | 8 parts |
| cymoxanil | 15 parts |
| Solpol 3353 (trade name, non-ionic surface-active agent manufactured by Toho Chemicals, Co., Ltd., Japan) | 10 parts |
| Lunox 1000C (trade name, as anionic surface-active agent manufactured by Toho Chemicals, Co., Ltd., Japan) | 1 part |
| 1% aqueous solution of Xanthan gum (natural high-molecular compound) | 10 parts |
| Water | 56 parts |

In the above respective flowables, each component except the active ingredient (present compound) are uniformly dissolved together to form a solution. The resulting mixture is added by the present compound, thoroughly stirred and wet-ground by means of sand mill to obtain a flowable. Upon use, the flowable is diluted with water up to one hundredth to ten thousandth in concentration and sprayed at a rate of 100 to 2000 g of the active ingredients per hectare.

| Formulation Example 16: Flowables | |
|---|---|
| Present compound No. 20 | 15 parts |
| Known compound B | 25 parts |
| Solpol 3353 (trade name, non-ionic surface-active agent manufactured by Toho Chemicals, Co., Ltd., Japan) | 10 parts |
| Lunox 1000C (trade name, as anionic surface-active agent manufactured by Toho Chemicals, Co., Ltd., Japan) | 2 part |
| 1% aqueous solution of Xanthan gum (natural high-molecular compound) | 10 parts |
| Water | 38 parts |

In the above respective flowables, each component except the active ingredient (present compound) are uniformly dissolved together to form a solution. The resulting mixture is added by the present compound, thoroughly stirred and wet-ground by means of sand mill to obtain a flowable. Upon use, the flowable is diluted with water up to one hundredth to ten thousandth in concentration and sprayed at a rate of 100 to 2000 g of the active ingredients per hectare.

Next, the effect of the compounds of the present invention is concretely described hereinafter by reference to biological tests.

Test Example 1 Test of preventive efficacy against Phytophthora infestans:

When tomato plants (cultivar: Fukuju), which were growing in pots each having a diameter of 8 cm, became 3-leaf state, the compositions of the present invention, which were in the form of the wettable powders as formed in accordance with the above-mentioned formulation examples 1 to 3 and 11 to 13 and which were diluted with water into a determined concentration of the effective ingredient, were sprayed thereover with a gun type sprayer in an amount of 20 ml/pot. Next day after the spraying, a suspension of spores of Phytophthora infestans (2 x $10^5$/ml) was sprayed over the plants, and the pots were put in an inoculation box kept at a temperature of 20 °C and humidity of 95% or more for 5 days. Afterwards, the proportion of the diseased area on the leaf in each plant was measured. The protective value was calculated on the basis of the following formula:

Protective value = $(1 - \frac{A}{B}) \times 100$

(Note:
A means "Proportion of diseased area on the leaves of test plants" and
B means "Proportion of diseased area on the leaves of control plants")

The test results obtained are shown in Table 2.

Test Example 2 Test of curative efficacy against Phytophthora infestans:

When tomato plants (cultivar: Fukuju), which were growing in pots each having a diameter of 8 cm, became 3-leaf state, a suspension of spores of Phytophthora infestans (2 x $10^5$/ml) was sprayed over the plants, and the pots were put in an inoculation box kept at a temperature of 20 °C and humidity of 95% or more for a whole day and night. Afterwards, the compositions of the present invention, which were in the form of the wettable powders as formed in accordance with the above-mentioned formulation examples 1 to 3 and 11 to 13 and which were diluted with water into a determined concentration of the effective ingredient, were sprayed thereover with a gun type sprayer in an amount of 20 ml/pot. After air-drying, the pot was placed in said inoculation box, and the proportion of the diseased area on the leaf in each plant formed after 5 days passed was measured. The protective value was calculated on the basis of the following formula:

Protective value = $(1 - \frac{A}{B}) \times 100$

(Note:
A means "Proportion of diseased area on the leaves of test plants" and
B means "Proportion of diseased area on the leaves of control plants")

The test results obtained are shown in Table 3.

Test Example 3 Test of preventive efficacy against Phytophthora infestans:

When potato plants (cultivar: Danshaku), which were growing in pots each having a diameter of 21 cm, became 5- to 6-leaf state, the compositions of the present invention, which were in the form of the wettable powders as formed in accordance with the above-mentioned formulation examples 1 to 3 and 11 to 13 and which were diluted with water into a determined concentration of the effective ingredient, were sprayed thereover with a gun type sprayer in an amount of 30 ml/pot. Next day after the spraying, a suspension of spores of Phytophthora infestans (2 x $10^5$/ml) was sprayed over the plants, and the pots were put in an inoculation box kept at a temperature of 20 °C and humidity of 95% or more for 5 days. Afterwards, the proportion of the diseased area on the leaf in each plant was measured. The protective value was calculated on the basis of the following formula:

Protective value = $(1 - \frac{A}{B}) \times 100$

(Note:
A means "Proportion of diseased area on the leaves of test plants" and
B means "Proportion of diseased area on the leaves of control plants")

The test results obtained are shown in Table 4.

Test Example 4 Test of preventive efficacy against Pseudoperonospora cubensis:

When cucumber plants (cultivar: Sagami-hanjiro), which were growing in pots each having a diameter of 8 cm, became 1- to 2-leaf state, the compositions of the present invention, which were in the form of the wettable powders as formed in accordance with the above-mentioned formulation examples 1 to 3 and 11 to 13 and which were diluted with water into a determined concentration of the effective ingredient, were

sprayed thereover with a gun type sprayer in an amount of 20 ml/pot. Next day after the spraying, a suspension of spores of Pseudoperonospora cubensis (2 x $10^5$/ml) was sprayed over the plants, and the pots were put in an inoculation box kept at a temperature of 25° C and humidity of 95% or more for a whole day and night. Afterwards, the pot in a greenhouse, and the 7th days after the inoculation, the proportion of the diseased area on the leaf in each plant was measured. The protective value was calculated on the basis of the following formula:

Protective value = $(1 - \frac{A}{B}) \times 100$

(Note:

A means "Proportion of diseased area on the leaves of test plants" and

B means "Proportion of diseased area on the leaves of control plants")

The test results obtained are shown in Table 5.

Test Example 5 Test of curative efficacy against Pseudoperonospora cubensis:

When cucumber plants (cultivar: Sagami-hanjiro), which were growing in pots each having a diameter of 8 cm, became 1- or 2-leaf state, a suspension of spores of Pseudoperonospor cubensis (2 x $10^5$/ml) was sprayed over the plants, and the pots were put in an inoculation box kept at a temperature of 25 °C and humidity of 95% or more for a whole day and night. Afterwards, the compositions of the present invention, which were in the form of the wettable powders as formed in accordance with the above-mentioned formulation examples 1 to 3 and 11 to 13 and which were diluted with water into a determined concentration of the effective ingredient, were sprayed thereover with a gun type sprayer in an amount of 20 ml/pot. Afterwards, the pots were put in a greenhouse, and 7th day after the inoculation, the proportion of the diseased area on the leaf in each plant was measured. The protective value was calculated on the basis of the following formula:

Protective value = $(1 - \frac{A}{B}) \times 100$

(Note:

A means "Proportion of diseased area on the leaves of test plants" and

B means "Proportion of diseased area on the leaves of control plants")

The test results obtained are shown in Table 6.

Test Example 6 Test of preventive efficacy against Alternaria solani

When tomato plants (cultivar: Fukuju), which were growing in pots each having a diameter of 8 cm, became 3-leaf state, the compositions of the present invention, which were in the form of the wettable powders as formed in accordance with the above- mentioned formulation examples 1 to 3 and 11 to 13 and which were diluted with water into a determined concentration of the effective ingredient, were sprayed thereover with a gun type sprayer in an amount of 20 ml/pot. Next day after the spraying, a suspension of spores of Alternaria solani (4 x $10^5$/ml) was sprayed over the plants, and the pots were put in an inoculation box kept at a temperature of 25 °C and humidity of 95% or more for 7 day. Afterwards, the proportion of the diseased area on the leaf in each plant was measured. The protective value was calculated on the basis of the following formula:

Protective value = $(1 - \frac{A}{B}) \times 100$

(Note:

A means "Proportion of diseased area on the leaves of test plants" and

B means "Proportion of diseased area on the leaves of control plants")

The test results obtained are shown in Table 7.

Table 2

(Test Results of preventive efficacy against *Phytophthora infestans* (tomato))

| Compounds | Concentration on treatment of effective ingredient(ppm) | Inhibitory value |
|---|---|---|
| Compound No. 3 | 6 | 50 |
| | 3 | 30 |
| Compound No. 4 | 6 | 40 |
| | 3 | 20 |
| Compound No. 6 | 6 | 70 |
| | 3 | 30 |
| Compound No. 7 | 6 | 80 |
| | 3 | 20 |
| Compound No. 11 | 6 | 70 |
| | 3 | 20 |
| Compound No. 12 | 6 | 50 |
| | 3 | 15 |
| Compound No. 14 | 6 | 75 |
| | 3 | 30 |
| Compound No. 15 | 6 | 70 |
| | 3 | 20 |
| Compound No. 17 | 3 | 80 |
| | 1.5 | 15 |
| Compound No. 20 | 6 | 75 |
| | 3 | 20 |
| Mancozeb | 120 | 50 |
| | 60 | 0 |

Table 2 (continued)

(Test Results of preventive efficacy against *Phytophthora infestans* (tomato))

| Compounds | Concentration on treatment of effective ingredient(ppm) | Inhibitory value |
|---|---|---|
| Captan | 120 | 60 |
| | 60 | 20 |
| Chlorothalonil | 120 | 80 |
| | 60 | 10 |
| Copper oxychloride | 480 | 40 |
| | 240 | 0 |
| Fluazinam | 120 | 70 |
| | 60 | 20 |
| Anilazine | 240 | 60 |
| | 120 | 20 |
| Metalaxyl | 480 | 45 |
| | 240 | 10 |
| Oxadixyl | 24 | 75 |
| | 12 | 20 |
| Fosethyl | 480 | 0 |
| | 240 | 0 |
| Cymoxanil | 120 | 60 |
| | 60 | 25 |
| Known Compound A | 60 | 70 |
| | 30 | 20 |
| Known Compound B | 60 | 65 |
| | 30 | 30 |

Table 2 (continued)

(Test Results of preventive efficacy against *Phytophthora infestans* (tomato))

| Compounds | Concentration on treatment of effective ingredient(ppm) | Inhibitory value |
|---|---|---|
| Compound No. 11 | 3 + 30 | 100 |
| + Mancozeb | 1.5 + 60 | 100 |
| Compound No. 15 | 3 + 30 | 100 |
| + Mancozeb | 1.5 + 60 | 100 |
| Compound No. 20 | 3 + 30 | 100 |
| + Mancozeb | 1.5 + 60 | 100 |
| Compound No. 3 | 3 + 30 | 100 |
| + Captan | 1.5 + 60 | 98 |
| Compound No. 6 | 3 + 30 | 98 |
| + Chlorothalonil | 1.5 + 60 | 100 |
| Compound No. 7 | 3 + 120 | 98 |
| + Copper | | |
| oxychloride | 1.5 + 240 | 95 |
| Compound No. 15 | 3 + 120 | 100 |
| + Copper | | |
| oxychloride | 1.5 + 240 | 100 |
| Compound No. 17 | 1.5 + 120 | 98 |
| + Copper | | |
| oxychloride | 0.7 + 240 | 100 |
| Compound No. 4 | 3 + 30 | 100 |
| + Fluazinam | 1.5 + 60 | 100 |

Table 2 (continued)

(Test Results of preventive efficacy against *Phytophthora infestans* (tomato))

| Compounds | Concentration on treatment of effective ingredient (ppm) | Inhibitory value |
|---|---|---|
| Compound No. 12 | 3 + 60 | 100 |
| + Anilazine | 1.5 + 120 | 100 |
| Compound No. 7 | 3 + 120 | 98 |
| + Metalaxyl | 1.5 + 240 | 95 |
| Compound No. 11 | 3 + 6 | 100 |
| + Oxadixyl | 1.5 + 12 | 100 |
| Compound No. 3 | 3 + 120 | 95 |
| + Fosethyl | 1.5 + 240 | 95 |
| Compound No. 4 | 3 + 30 | 100 |
| + Cymoxanil | 1.5 + 60 | 100 |
| Compound No. 14 | 3 + 30 | 100 |
| + Cymoxanil | 1.5 + 60 | 100 |
| Compound No. 6 | 3 + 15 | 100 |
| + Known Compound A | 1.5 + 30 | 100 |
| Compound No. 20 | 3 + 15 | 100 |
| + Known Compound A | 1.5 + 30 | 100 |
| Compound No. 12 | 3 + 15 | 100 |
| + Known Compound B | 1.5 + 30 | 100 |

Table 3

(Test Results of curative efficacy against *Phytophthora infestans* (tomato))

| Compounds | Concentration on treatment of effective ingredient(ppm) | Inhibitory value |
|---|---|---|
| Compound No. 2 | 6 | 70 |
| | 3 | 40 |
| Compound No. 5 | 6 | 65 |
| | 3 | 25 |
| Compound No. 6 | 6 | 80 |
| | 3 | 50 |
| Compound No. 7 | 6 | 80 |
| | 3 | 35 |
| Compound No. 10 | 6 | 75 |
| | 3 | 30 |
| Compound No. 11 | 6 | 80 |
| | 3 | 50 |
| Compound No. 13 | 6 | 75 |
| | 3 | 30 |
| Compound No. 15 | 6 | 75 |
| | 3 | 30 |
| Compound No. 16 | 3 | 80 |
| | 1.5 | 20 |
| Compound No. 18 | 6 | 75 |
| | 3 | 15 |
| Compound No. 20 | 6 | 75 |
| | 3 | 30 |

Table 3 (continued)

(Test Results of curative efficacy against *Phytophthora infestans* (tomato))

| Compounds | Concentration on treatment of effective ingredient(ppm) | Inhibitory value |
|---|---|---|
| Mancozeb | 960 | 0 |
| | 480 | 0 |
| Captan | 960 | 0 |
| | 480 | 0 |
| Chlorothalonil | 960 | 20 |
| | 480 | 0 |
| Copper oxychloride | 960 | 0 |
| | 480 | 0 |
| Fluazinam | 960 | 0 |
| | 480 | 0 |
| Anilazine | 960 | 0 |
| | 480 | 0 |
| Metalaxyl | 12 | 75 |
| | 6 | 40 |
| Oxadixyl | 24 | 80 |
| | 12 | 50 |
| Fosethyl | 480 | 20 |
| | 240 | 0 |
| Cymoxanil | 120 | 40 |
| | 60 | 15 |
| Known Compound A | 120 | 0 |
| | 60 | 0 |

Table 3 (continued)

(Test Results of curative efficacy against *Phytophthora infestans* (tomato))

| Compounds | Concentration on treatment of effective ingredient(ppm) | Inhibitory value |
|---|---|---|
| Known Compound B | 120 | 65 |
| | 60 | 20 |
| Compound No. 6 | 3 + 240 | 95 |
| + Mancozeb | 1.5 + 480 | 95 |
| Compound No. 7 | 3 + 240 | 95 |
| + Mancozeb | 1.5 + 480 | 95 |
| Compound No. 16 | 3 + 240 | 98 |
| + Mancozeb | 1.5 + 480 | 98 |
| Compound No. 18 | 3 + 240 | 100 |
| + Mancozeb | 1.5 + 480 | 98 |
| Compound No. 10 | 3 + 240 | 93 |
| + Captan | 1.5 + 480 | 95 |
| Compound No. 13 | 3 + 240 | 98 |
| + Chlorothalonil | 1.5 + 480 | 98 |
| Compound No. 20 | 3 + 240 | 100 |
| + Chlorothalonil | 1.5 + 480 | 100 |
| Compound No. 11 | 3 + 240 | 98 |
| + Copper oxychloride | 1.5 + 480 | 95 |
| Compound No. 15 | 3 + 240 | 98 |
| + Copper oxychloride | 1.5 + 480 | 98 |

Table 3 (continued)

(Test Results of curative efficacy against *Phytophthora infestans* (tomato))

| Compounds | Concentration on treatment of effective ingredient (ppm) | Inhibitory value |
|---|---|---|
| Compound No. 20 | 3 + 240 | 95 |
| + Copper oxychloride | 1.5 + 480 | 100 |
| Compound No. 2 | 3 + 240 | 95 |
| + Fluazinam | 1.5 + 480 | 90 |
| Compound No. 5 | 3 + 240 | 93 |
| + Anilazine | 1.5 + 480 | 90 |
| Compound No. 2 | 3 + 3 | 100 |
| + Metalaxyl | 1.5 + 6 | 98 |
| Compound No. 10 | 3 + 6 | 100 |
| + Oxadixyl | 1.5 + 12 | 95 |
| Compound No. 5 | 3 + 120 | 85 |
| + Fosethyl | 1.5 + 240 | 90 |
| Compound No. 7 | 3 + 30 | 98 |
| + Cymoxanil | 1.5 + 60 | 100 |
| Compound No. 13 | 3 + 30 | 90 |
| + Known Compound A | 1.5 + 60 | 90 |
| Compound No. 15 | 3 + 30 | 100 |
| + Known Compound A | 1.5 + 60 | 98 |
| Compound No. 11 | 3 + 30 | 100 |
| + Known Compound B | 1.5 + 60 | 100 |

Table 4

(Test Results of preventive efficacy against *Phytophthora infestans* (potato))

| Compounds | Concentration on treatment of effective ingredient(ppm) | Inhibitory value |
|---|---|---|
| Compound No. 1 | 6 | 60 |
| | 3 | 40 |
| Compound No. 3 | 6 | 75 |
| | 3 | 30 |
| Compound No. 6 | 6 | 80 |
| | 3 | 30 |
| Compound No. 7 | 6 | 80 |
| | 3 | 30 |
| Compound No. 8 | 6 | 60 |
| | 3 | 20 |
| Compound No. 9 | 6 | 80 |
| | 3 | 30 |
| Compound No. 11 | 6 | 75 |
| | 3 | 30 |
| Compound No. 14 | 6 | 75 |
| | 3 | 20 |
| Compound No. 15 | 6 | 80 |
| | 3 | 30 |
| Compound No. 17 | 6 | 70 |
| | 1.5 | 25 |
| Compound No. 19 | 6 | 70 |
| | 3 | 25 |
| Mancozeb | 120 | 50 |
| | 60 | 20 |

Table 4 (continued)

(Test Results of preventive efficacy against *Phytophthora infestans* (potato))

| Compounds | Concentration on treatment of effective ingredient(ppm) | Inhibitory value |
|---|---|---|
| Captan | 120 | 60 |
| | 60 | 0 |
| Chlorothalonil | 120 | 80 |
| | 60 | 50 |
| Copper oxychloride | 480 | 50 |
| | 240 | 0 |
| Fluazinam | 120 | 75 |
| | 60 | 40 |
| Anilazine | 240 | 65 |
| | 120 | 0 |
| Metalaxyl | 60 | 70 |
| | 30 | 25 |
| Oxadixyl | 24 | 50 |
| | 12 | 20 |
| Fosethyl | 480 | 30 |
| | 240 | 0 |
| Cymoxanil | 120 | 60 |
| | 60 | 25 |
| Known Compound A | 60 | 75 |
| | 30 | 20 |
| Known Compound B | 60 | 80 |
| | 30 | 40 |

Table 4 (continued)

(Test Results of preventive efficacy against *Phytophthora infestans* (potato))

| Compounds | Concentration on treatment of effective ingredient(ppm) | Inhibitory value |
|---|---|---|
| Compound No. 6 | 3 + 30 | 100 |
| + Mancozeb | 1.5 + 60 | 95 |
| Compound No. 9 | 3 + 30 | 100 |
| + Mancozeb | 1.5 + 60 | 95 |
| Compound No. 15 | 3 + 30 | 100 |
| + Mancozeb | 1.5 + 60 | 100 |
| Compound No. 19 | 3 + 30 | 100 |
| + Mancozeb | 1.5 + 60 | 100 |
| Compound No. 1 | 3 + 30 | 98 |
| + Captan | 1.5 + 60 | 95 |
| Compound No. 3 | 3 + 30 | 100 |
| + Chlorothalonil | 1.5 + 60 | 100 |
| Compound No. 8 | 3 + 120 | 98 |
| + Copper oxychloride | 1.5 + 240 | 98 |
| Compound No. 14 | 3 + 120 | 100 |
| + Copper oxychloride | 1.5 + 240 | 100 |
| Compound No. 15 | 3 + 120 | 100 |
| + Copper oxychloride | 1.5 + 240 | 100 |

Table 4 (continued)

(Test Results of preventive efficacy against *Phytophthora infestans* (potato))

| Compounds | Concentration on treatment of effective ingredient (ppm) | Inhibitory value |
|---|---|---|
| Compound No. 11 | 3 + 30 | 100 |
| + Fluazinam | 1.5 + 60 | 100 |
| Compound No. 17 | 1.5 + 30 | 100 |
| + Fluazinam | 0.7 + 60 | 100 |
| Compound No., 7 | 3 + 60 | 95 |
| + Anilazine | 1.5 + 120 | 95 |
| Compound No. 1 | 3 + 15 | 100 |
| + Metalaxyl | 1.5 + 30 | 98 |
| Compound No. 3 | 3 + 6 | 100 |
| + Oxadixyl | 1.5 + 12 | 100 |
| Compound No. 11 | 3 + 120 | 90 |
| + Fosethyl | 1.5 + 240 | 90 |
| Compound No. 8 | 3 + 30 | 93 |
| + Cymoxanil | 1.5 + 60 | 90 |
| Compound No. 7 | 3 + 15 | 100 |
| + Known Compound A | 1.5 + 30 | 95 |
| Compound No. 19 | 3 + 15 | 100 |
| + Known Compound A | 1.5 + 30 | 100 |
| Compound No. 9 | 3 + 15 | 100 |
| + Known Compound B | 1.5 + 30 | 100 |

Table 5

(Test Results of preventive efficacy against *Pseudoperonospora cubensis*)

| Compounds | Concentration on treatment of effective ingredient(ppm) | Inhibitory value |
|---|---|---|
| Compound No. 4 | 6 | 80 |
| | 3 | 30 |
| Compound No. 6 | 6 | 60 |
| | 3 | 15 |
| Compound No. 9 | 6 | 70 |
| | 3 | 30 |
| Compound No. 10 | 6 | 70 |
| | 3 | 40 |
| Compound No. 12 | 6 | 60 |
| | 3 | 15 |
| Compound No. 13 | 6 | 60 |
| | 3 | 15 |
| Compound No. 14 | 6 | 70 |
| | 3 | 20 |
| Compound No. 15 | 6 | 80 |
| | 3 | 30 |
| Compound No. 16 | 3 | 80 |
| | 1.5 | 30 |
| Compound No. 18 | 6 | 70 |
| | 3 | 25 |
| Mancozeb | 120 | 70 |
| | 60 | 40 |

Table 5 (continued)

(Test Results of preventive efficacy against *Pseudoperonospora cubensis*)

| Compounds | Concentration on treatment of effective ingredient(ppm) | Inhibitory value |
|---|---|---|
| Captan | 120 | 50 |
| | 60 | 10 |
| Chlorothalonil | 120 | 80 |
| | 60 | 40 |
| Copper oxychloride | 480 | 60 |
| | 240 | 0 |
| Fluazinam | 30 | 75 |
| | 15 | 40 |
| Anilazine | 240 | 60 |
| | 120 | 20 |
| Metalaxyl | 6 | 70 |
| | 3 | 40 |
| Oxadixyl | 12 | 70 |
| | 6 | 30 |
| Fosethyl | 480 | 40 |
| | 240 | 0 |
| Cymoxanil | 60 | 75 |
| | 30 | 25 |
| Known Compound A | 60 | 70 |
| | 30 | 30 |
| Known Compound B | 60 | 70 |
| | 30 | 30 |

Table 5 (continued)

(Test Results of preventive efficacy against *Pseudoperonospora cubensis*)

| Compounds | Concentration on treatment of effective ingredient(ppm) | Inhibitory value |
|---|---|---|
| Compound No. 4 | 3 + 30 | 100 |
| + Mancozeb | 1.5 + 60 | 100 |
| Compound No. 14 | 3 + 30 | 100 |
| + Mancozeb | 1.5 + 60 | 100 |
| Compound No. 18 | 3 + 30 | 100 |
| + Mancozeb | 1.5 + 60 | 100 |
| Compound No. 6 | 3 + 30 | 100 |
| + Captan | 1.5 + 60 | 98 |
| Compound No. 9 | 3 + 30 | 100 |
| + Chlorothalonil | 1.5 + 60 | 100 |
| Compound No. 15 | 3 + 30 | 100 |
| + Copper oxychloride | 1.5 + 60 | 100 |
| Compound No. 10 | 3 + 120 | 95 |
| | 1.5 + 240 | 95 |
| Compound No. 15 | 3 + 120 | 100 |
| + Copper oxychloride | 1.5 + 240 | 100 |
| Compound No. 16 | 1.5 + 120 | 100 |
| + Copper oxychloride | 0.7 + 240 | 100 |
| Compound No. 12 | 3 + 7.5 | 100 |
| + Fluazinam | 1.5 + 15 | 98 |

Table 5 (continued)

(Test Results of preventive efficacy against *Pseudoperonospora cubensis*)

| Compounds | Concentration on treatment of effective ingredient (ppm) | Inhibitory value |
|---|---|---|
| Compound No. 13 | 3 + 60 | 95 |
| + Anilazine | 1.5 + 120 | 93 |
| Compound No. 13 | 3 + 1.5 | 98 |
| + Metalaxyl | 1.5 + 3 | 100 |
| Compound No. 9 | 3 + 3 | 98 |
| + Oxadixyl | 1.5 + 6 | 98 |
| Compound No. 4 | 3 + 120 | 93 |
| + Fosethyl | 1.5 + 240 | 95 |
| Compound No. 10 | 3 + 15 | 100 |
| + Cymoxanil | 1.5 + 30 | 98 |
| Compound No. 12 | 3 + 15 | 100 |
| + Known Compound A | 1.5 + 30 | 100 |
| Compound No. 18 | 3 + 15 | 100 |
| + Known Compound A | 1.5 + 30 | 100 |
| Compound No. 6 | 3 + 15 | 100 |
| + Known Compound B | 1.5 + 30 | 100 |

Table 6

(Test Results of curative efficacy against *Pseudoperonospora cubensis*)

| Compounds | Concentration on treatment of effective ingredient(ppm) | Inhibitory value |
|---|---|---|
| Compound No. 2 | 6 | 65 |
| | 3 | 25 |
| Compound No. 5 | 6 | 65 |
| | 3 | 25 |
| Compound No. 8 | 6 | 70 |
| | 3 | 20 |
| Compound No. 9 | 6 | 80 |
| | 3 | 40 |
| Compound No. 11 | 6 | 80 |
| | 3 | 40 |
| Compound No. 13 | 6 | 65 |
| | 3 | 20 |
| Compound No. 15 | 6 | 70 |
| | 3 | 25 |
| Compound No. 17 | 3 | 80 |
| | 1.5 | 15 |
| Compound No. 18 | 6 | 70 |
| | 3 | 20 |
| Compound No. 20 | 6 | 70 |
| | 3 | 20 |

Table 6 (continued)

(Test Results of curative efficacy against *Pseudoperonospora cubensis*)

| Compounds | Concentration on treatment of effective ingredient(ppm) | Inhibitory value |
|---|---|---|
| Mancozeb | 960 | 0 |
| | 480 | 0 |
| Captan | 960 | 0 |
| | 480 | 0 |
| Chlorothalonil | 960 | 0 |
| | 480 | 0 |
| Copper oxychloride | 960 | 0 |
| | 480 | 0 |
| Fluazinam | 960 | 0 |
| | 480 | 0 |
| Anilazine | 960 | 0 |
| | 480 | 0 |
| Metalaxyl | 6 | 70 |
| | 3 | 20 |
| Compound No. 11 | 3 + 240 | 93 |
| + Mancozeb | 1.5 + 480 | 93 |
| Compound No. 15 | 3 + 240 | 98 |
| + Mancozeb | 1.5 + 480 | 95 |
| Compound No. 20 | 3 + 240 | 100 |
| + Mancozeb | 1.5 + 480 | 98 |
| Compound No. 8 | 3 + 240 | 95 |
| + Captan | 1.5 + 480 | 90 |

Table 6 (continued)

(Test Results of curative efficacy against *Pseudoperonospora cubensis*)

| Compounds | Concentration on treatment of effective ingredient (ppm) | Inhibitory value |
|---|---|---|
| Compound No. 9 | 3 + 240 | 98 |
| + Chlorothalonil | 1.5 + 480 | 98 |
| Compound No. 18 | 3 + 240 | 98 |
| + Chlorothalonil | 1.5 + 480 | 98 |
| Compound No. 2 | 3 + 240 | 90 |
| + Copper oxychloride | 1.5 + 480 | 90 |
| Compound No. 17 | 1.5 + 240 | 95 |
| + Copper oxychloride | 0.7 + 480 | 93 |
| Compound No. 15 | 3 + 240 | 98 |
| + Copper oxychloride | 1.5 + 480 | 98 |
| Compound No. 5 | 3 + 240 | 98 |
| + Fluazinam | 1.5 + 480 | 95 |
| Compound No. 13 | 3 + 240 | 93 |
| + Anilazine | 1.5 + 480 | 90 |
| Compound No. 9 | 3 + 1.5 | 98 |
| + Metalaxyl | 1.5 + 3 | 100 |
| Compound No. 2 | 3 + 6 | 98 |
| + Oxadixyl | 1.5 + 12 | 98 |
| Compound No. 5 | 3 + 120 | 90 |
| + Fosethyl | 1.5 + 240 | 93 |

Table 6 (continued)

(Test Results of curative efficacy against *Pseudoperonospora cubensis*)

| Compounds | Concentration on treatment of effective ingredient (ppm) | Inhibitory value |
|---|---|---|
| Compound No. 8 | 3 + 120 | 98 |
| + Cymoxanil | 1.5 + 240 | 98 |
| Compound No. 13 | 3 + 120 | 93 |
| + Known Compound A | 1.5 + 240 | 90 |
| Compound No. 20 | 3 + 15 | 98 |
| + Known Compound A | 1.5 + 30 | 95 |
| Compound No. 11 | 3 + 15 | 95 |
| + Known Compound B | 1.5 + 30 | 98 |

Table 7

(Test Results of preventive efficacy against *Alternaria solani*)

| Compounds | Concentration on treatment of effective ingredient(ppm) | Inhibitory value |
|---|---|---|
| Compound No. 3 | 50 | 0 |
| | 25 | 0 |
| Compound No. 4 | 50 | 0 |
| | 25 | 0 |
| Compound No. 6 | 50 | 20 |
| | 25 | 0 |
| Compound No. 7 | 50 | 20 |
| | 25 | 0 |
| Compound No. 10 | 50 | 0 |
| | 25 | 0 |
| Compound No. 11 | 50 | 20 |
| | 25 | 0 |
| Compound No. 12 | 50 | 0 |
| | 25 | 0 |
| Compound No. 15 | 50 | 0 |
| | 25 | 0 |
| Compound No. 16 | 50 | 10 |
| | 25 | 0 |
| Compound No. 18 | 50 | 0 |
| | 25 | 0 |
| Compound No. 19 | 50 | 20 |
| | 25 | 0 |
| Mancozeb | 240 | 70 |
| | 120 | 30 |

Table 7 (continued)

(Test Results of preventive efficacy against *Alternaria solani*)

| Compounds | Concentration on treatment of effective ingredient(ppm) | Inhibitory value |
|---|---|---|
| Captan | 240 | 70 |
| | 120 | 30 |
| Chlorothalonil | 240 | 80 |
| | 120 | 50 |
| Copper oxychloride | 480 | 60 |
| | 240 | 0 |
| Fluazinam | 240 | 80 |
| | 120 | 40 |
| Anilazine | 480 | 65 |
| | 240 | 25 |
| Known Compound B | 240 | 75 |
| | 120 | 30 |
| Compound No. 6 | 50 + 60 | 85 |
| + Mancozeb | 25 + 120 | 93 |
| Compound No. 10 | 50 + 60 | 85 |
| + Mancozeb | 25 + 120 | 93 |
| Compound No. 15 | 50 + 60 | 90 |
| + Mancozeb | 25 + 120 | 95 |
| Compound No. 16 | 50 + 60 | 93 |
| + Mancozeb | 25 + 120 | 93 |
| Compound No. 12 | 50 + 60 | 90 |
| + Captan | 25 + 120 | 90 |

Table 7 (continued)

(Test Results of preventive efficacy against *Alternaria solani*)

| Compounds | Concentration on treatment of effective ingredient(ppm) | Inhibitory value |
|---|---|---|
| Compound No. 3 | 50 + 60 | 85 |
| + Chlorothalonil | 25 + 120 | 90 |
| Compound No. 11 | 50 + 120 | 85 |
| + Copper | | |
| oxychloride | 25 + 240 | 85 |
| Compound No. 15 | 50 + 120 | 85 |
| + Copper | | |
| oxychloride | 25 + 240 | 90 |
| Compound No. 19 | 50 + 120 | 85 |
| + Copper | | |
| oxychloride | 25 + 240 | 93 |
| Compound No. 4 | 50 + 60 | 93 |
| + Fluazinam | 25 + 120 | 95 |
| Compound No. 18 | 50 + 60 | 98 |
| + Fluazinam | 25 + 120 | 95 |
| Compound No. 7 | 50 + 120 | 85 |
| + Anilazine | 25 + 240 | 85 |
| Compound No. 10 | 50 + 60 | 90 |
| + Known Compound B | 25 + 120 | 93 |
| Compound No. 18 | 50 + 60 | 85 |
| + Known Compound B | 25 + 120 | 85 |

**Claims**

Composition of fungicide for agricultral and horticultural use contining at least one of an amide substituted derivative represented by the formula (I) and its optical isomer and at least one of the active ingredient compound of the known fungicide,

$\mathrm{A{-}CONH\underset{B}{\underset{|}{C}}H{-}D}$ (I)

( wherein A represents a five membered heterocyclic aromatic group represented by

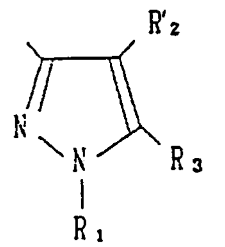 , 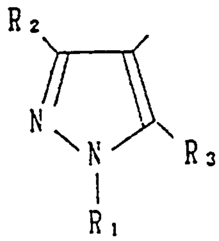 or 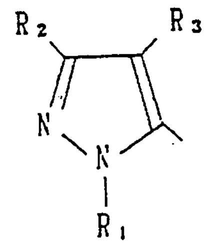 ,

B represents a five membered heterocyclic aromatic group represented by

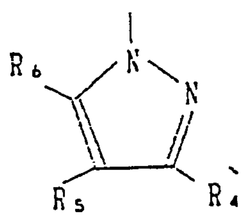 , 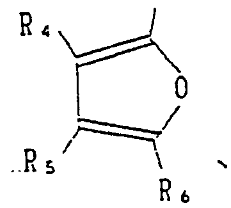 , 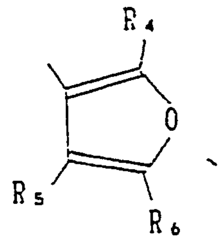 ,

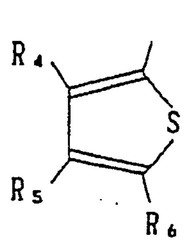 or 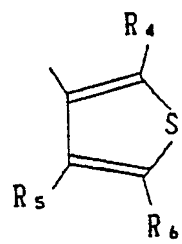

D represents -CN. $-CSNH_2$ or $-C(SO)NH_2$.

Wherein $R_1$ represents a hydrogen atom, a lower alkyl group having from 1 to 8 carbon atoms, a cycloalkyl group having from 3 to 6 carbon atoms, a cycloalkylalkyl group having from 4 to 8 carbon atoms, a halogenated alkyl group having from 1 to 8 carbon atoms, an alkenyl group having from 2 to 8 carbon atoms, a halogenated alkeny group having from 2 to 8 carbon atoms, alkynyl having from 2 to 8 carbon atoms or an alenyl group having from 3 to 8 carbon atoms,

$R_2$ and $R_3$ represents each independently a hydrogen atom, a lower alkyl group having from 1 to 4 carbon atoms, a hologen atom, a hologenated alkyl group having from 1 to 4 carbon atoms, an alkoxy group having from 1 to 4 carbon atoms, cyano group or a lower alkylthio group having from 1 to 4 carbon atoms,

$R_4$ , $R_5$ and $R_6$ represents each independently a hydrogen atom, a lower alkyl group having from 1 to 4 carbon atoms, halogen atom or a halogenated alkyl group having from 1 to 4 carbon atoms.

2. Composition as set forth in Claim 1, wherein the known active ingredient compound of the known fungicide is dithiocarbamate compound, N-haloalkylthio compound, organochlorine compound, sulfinic acid compound, inroganic copper compound, organic copper compound, aniline compound, naphthoquinone compound, acylalanine compound, phosfinic acid compound, cyano-oxim compound, acrylic amide compound or acrylic acid compound.